# EUROPEAN PATENT APPLICATION

(11) **EP 0 960 563 A2**
(43) Date of publication of application: **01.12.1999**
(21) Application number: 99110127.0
(22) Date of filing: 25.05.1999
(51) Int. Cl.: A01K 31/08

(54) **Animal cage**

(30) Priority: 27.05.1998 IT VI980043
(71) Applicant: Taurus Snc di Dal Santo Orfeo & C., 36013 Piovene Rocchette (VI) (IT)
(72) Inventor: Dal Santo, Orfeo, 36010 Cogollo del Cengio (VI) (IT); Dal Santo, Sergio, 36013 Piovene Rocchette (VI) (IT)
(74) Representative: Bonini, Ercole

(57) **Abstract**

The invention is an animal cage (1) with polyhedral base, comprising at least one bottom (3) and one top (2) that can be coupled to the respective sides (4,5,6,7). Each one of said sides (4,5,6,7) is connected to the adjacent sides through articulation means suitable for ensuring a reciprocal rotation of at least 90°.

## Description

The invention concerns an animal cage for industrial or domestic use, characterized in that it can be folded.

The known cages can have any shape and in most cases have polyhedral base and comprise a bottom, a top and one or more sides. The volume defined by the sides, the bottom and the top constitute the space within which the animal can move.

One of the components that significantly affect the price of the cage is the storage cost. This cost decreases as the number of cages that can be stored in a given volume increases. In other words, the storage cost decreases if the number of cages per unit of volume can be increased.

A further cost that affects the price of the cage is constituted by the transport cost, which also depends on the volume occupied by each cage and consequently on the number of cages that can be transported by the same means.

According to a known application, the cages are obtained by welding all their components, that is, the top, the bottom and the sides.

According to what has been stated above, the drawback of this kind of cages is clearly represented by the fact that they occupy considerable volumes and therefore have high storage and transport costs, which consequently affects the final price of the cage itself.

According to another known application, these cages are supplied with all their components, that is, top, bottom and sides, separated and not assembled by the manufacturer. The assembly must be carried out by the dealer or by the final user. In this case a considerable reduction in the storage and transport costs can be obtained, but there is the inconvenience that the customer or dealer must provide for assembling the cage. This means that in this application the costs have been cut to the detriment of the practicality of the item.

The aim of the present invention is the implementation of a cage whose overall dimensions can be reduced as much as possible for storage and transport, even if it is supplied with most of its essential components already assembled.

A further aim to be achieved is the implementation of a cage for the final assembly of which only easy and quick operations are required.

These final operations that must be carried out by the shopkeeper or by the final user must be extremely easy, so that they can be performed even by unskilled persons.

The aims mentioned above and others that will be described in greater detail below have been achieved through the implementation of an animal cage that, according to the main claim, comprises at least a bottom and a top to be coupled to relevant sides, and is characterized in that each one of said sides is connected to the adjacent sides through articulation means suitable for ensuring a reciprocal rotation of at least 90°.

According to a favourite application of the invention, the articulation means are constituted by hinges obtained by bending at least a portion of the perimetrical edge of each side.

Further characteristics of the invention will be highlighted in greater detail in the description of some among many possible applications of the invention in question, illustrated in the attached drawings, wherein:
- Fig. 1 is a perspective view of the cage subject of the invention when assembled;
- Fig. 2 is an exploded perspective view of the cage of Figure 1;
- Fig. 3 is a front view of the cage when folded in such a way as to occupy the minimum possible volume;
- Fig. 4 is a top view of the cage of Figure 3;
- Fig. 5 is an exploded perspective view of another application of the cage subject of the invention;
- Fig. 6 is a magnified view of a particular implementation of the articulation means;
- Fig. 7 is a magnified view of a second, different implementation of the articulation means;
- Fig. 8 is a magnified view of a further implementation of the articulation means.

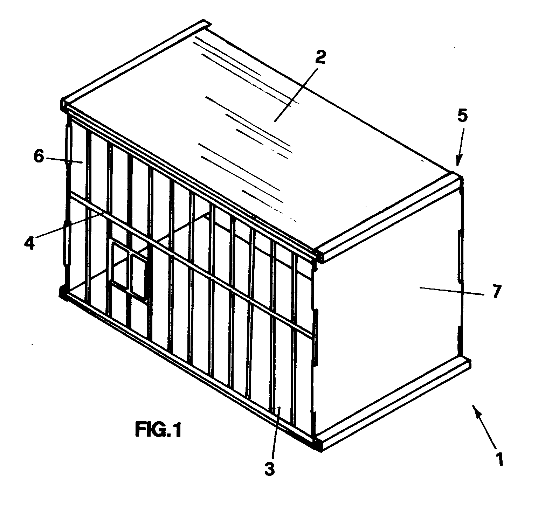

In Figure 1, which is a perspective view of the cage subject of the invention when assembled and in which the cage is indicated as a whole by 1, the cage has the shape of a polyhedron with rectangular base.

It comprises a top 2 and a bottom 3 that are removably connected to four sides, a front side 4, a rear side 5 and two lateral sides 6 and 7, positioned vertically and connected to one another in correspondence with their adjacent sides.

Each side is connected to the adjacent side through articulation means that, in the specific case described herein, are constituted by hinges suitable for ensuring the reciprocal rotation of the sides of at least 90°.

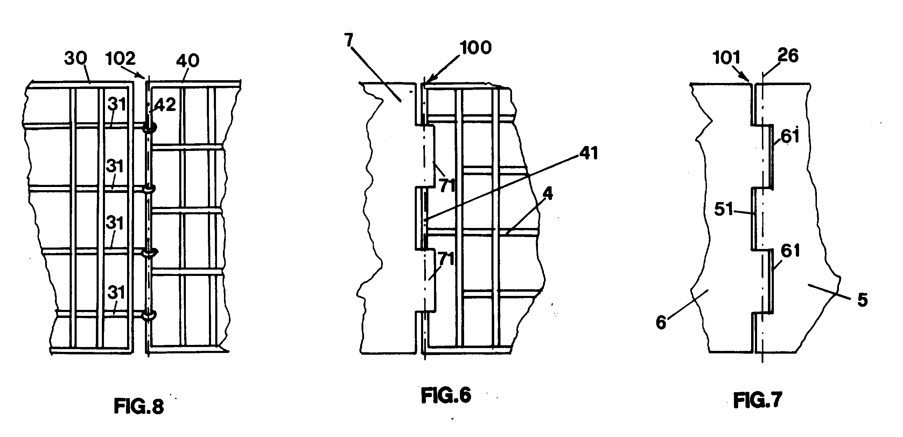

Figures 6 and 7 are magnified views of the two hinges 100 and 101 that connect the lateral side 7 to the front side 4 and the lateral side 6 to the rear side 5, respectively.

The hinge 100 is obtained by bending the terminal edge 71 of the blind side 7 in such a way as to hook the vertical wire 41 constituting the terminal corner of the side 4.

The hinge 101, instead, is obtained by bending the terminal edges 61 and 51 of both sides 6 and 5, so that said edges are staggered with respect to each other. A pin 26 inserted in the hinge 101 connects the two sides 5 and 6 to each other.

In this way the sides define a deformable structure and can be positioned one over the other for packaging and transport purposes. Upon assembly they can be spaced from one another in such a way as to define the practically rectangular configuration that makes up the cage.

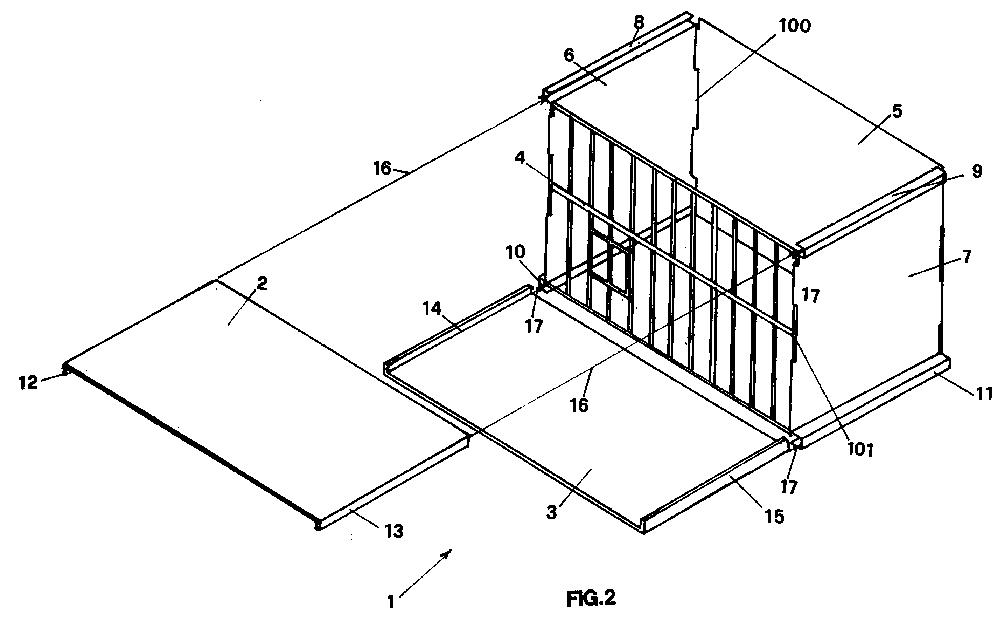

The two lateral sides 6 and 7 are provided with coupling means suitable for removably housing the top 2 and the bottom 3 and preferably positioned near their lower and upper edges. In the application represented in Figures 1 and 2, said coupling means comprise upper guides 8, 9 and lower guides 10, 11, obtained by bending the sides 6 and 7 near their upper and lower edges. The upper guides 8 and 9 house the corresponding side edges of the top 2, indicated by 12 and 13. The lower guides 10 and 11 house the corresponding side edges 14 and 15 of the bottom 3. The fitting of the top 2 is achieved by inserting one end of the edges 12 and 13 in the guides 8 and 9 and by pushing the top in the direction 16 until it touches the rear side 5. The fitting of the bottom 3 is achieved by inserting one end of the edges 14 and 15 in the guides 10 and 11 and by pushing the bottom 3 in the direction 17 until it touches the rear side 5.

The fitting of top and bottom in their housings ensures the necessary stiffness of the whole cage. In fact, the parallelism and squareness of the cage sides due to the presence of top and bottom, together with the constraints provided by the articulation means, ensure the necessary rigidity.

Obviously, if the top 2 and the bottom 3 are removed, the structure constituted by the sides becomes unstable.

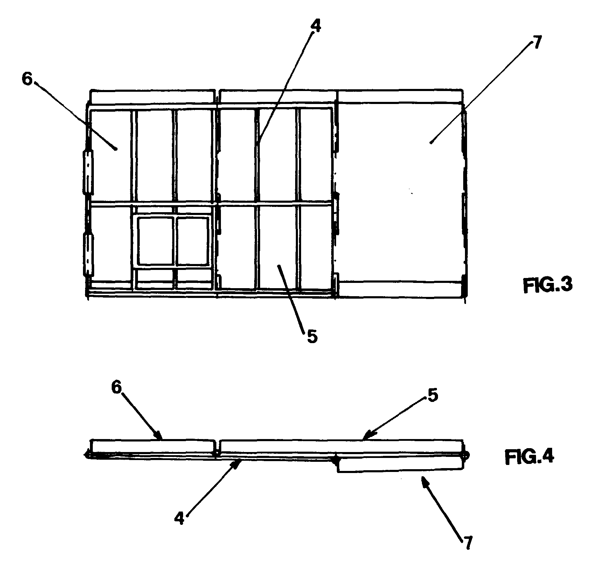

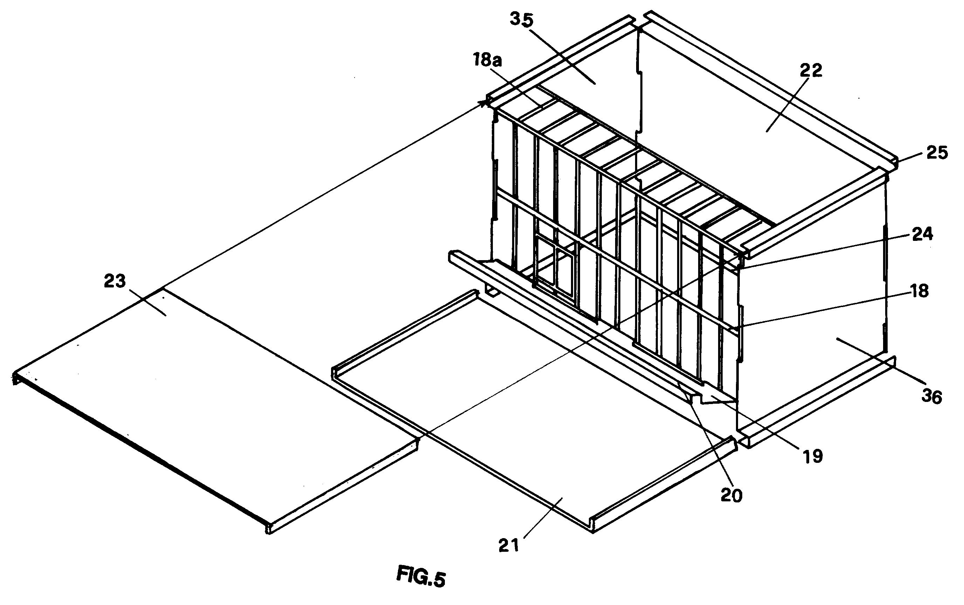

The cage can be folded for packaging purposes, as represented in Figures 3 and 4, by horizontally moving two opposite vertical sides along parallel, but opposite directions.

Figure 4 shows the reduction in volume obtained owing to the articulation means provided on the cage. The movement of the sides is possible thanks to the presence of the hinges and so when the structure is in the most compact position the sides practically lie on the same plane.

The assembly and disassembly of the cage are quite easy and no special tools or skills are required.

The sides, top and bottom of the cage can be manufactured in different shapes and materials.

In the case represented in Figure 1, the front side 4 is made of a wire net, while the other sides, the top and the bottom are made of plate.

According to a further application of the invention shown in Figure 5, the front side 18 of the cage has the upper part indicated by 18a bent in the shape of an L, so that it constitutes a part of the cage top. In its lower part the side 18 is provided with a terminal element 19 that can be raised and lowered. Said terminal element is connected to the front side through articulation means and is provided with a guide 20 suitable for housing the front part of the bottom 21.

The dimensions of the top 23 are such as to cover the space defined by the lateral sides 35 and 36, by the rear side 22 and by the bent part 18a of the front side 18.

Two guides 24 and 25 suitable for housing the top 23 and the bottom 21, respectively, are also provided near the lower and upper edges of the rear side 22.

In this way, thanks to the special L-shaped structure of the front side 18, better aeration of the cage inside and more visibility through the top have been achieved.

Furthermore, the presence of the guides either on the rear side 24 and on the terminal element 19 of the front side increases the stiffness of the cage.

The articulation means used to connect the cage sides are constituted by hinges and can be of different types.

Figure 8 shows a possible connection of two wire net sides 30 and 40 in a cage that is not represented. In this case some horizontal wires 31 of the side 30 are hooked to the last vertical wire 42 that belongs to the adjacent side 40 and serves as a pin.

The articulation means employed in the invention may also be hinges that can be uncoupled, in such a way as to permit the reciprocal disconnection of two adjacent sides.

In this case the packaging of the cage can be further optimized.

It is obvious that the cage base can have any shape and that any material can be used for the construction of the cage.

## Claims

1. Animal cage with polyhedral base, comprising at least one bottom and one top that can be coupled to the respective sides, **characterized in that** each one of said sides is connected to the sides adjacent to it through articulation means suitable for ensuring a reciprocal rotation of at least 90°.

2. Animal cage according to claim 1, **characterized in that** the articulation means of the sides are hinges (100, 101).

3. Animal cage according to claim 1, **characterized in that** the hinges (100, 101) can be uncoupled.

4. Animal cage according to claim 2, **characterized in that** said hinges are obtained by bending at least a lateral portion (51, 61, 71) of said sides (5, 6, 7).

5. Animal cage according to claim 2, **characterized in that** the connection element between the two sides is constituted by the last vertical wire (42) of a side made of wire net.

6. Animal cage according to claim 1, **characterized in that** the bottom (3, 21) is slidably movable through parallel guides (11) belonging to the lateral sides (6, 7).

7. Animal cage according to one of the previous claims, **characterized in that** the top (2, 23) is slidably movable through parallel guides belonging to the lateral sides (6, 7).
